# EUROPÄISCHE PATENTSCHRIFT

(11) **EP 2 761 738 B1**
(45) Veröffentlichungstag und Bekanntmachung des Hinweises auf die Patenterteilung: **30.12.2015**
(21) Anmeldenummer: 12787354.5
(22) Anmeldetag: 01.10.2012
(51) Int. Cl.: H02P 8/04, H02P 8/24, H02P 8/32, H02P 8/14, H02P 8/34

(54) **VERFAHREN UND SCHALTUNGSANORDNUNG ZUM ANSTEUERN VON SCHRITTMOTOREN**
METHOD AND CIRCUIT ARRANGEMENT FOR CONTROLLING STEPPER MOTORS
PROCÉDÉ ET AGENCEMENT D'UN CIRCUIT PERMETTANT DE COMMANDER DES MOTEURS PAS À PAS

(30) Priorität: 30.09.2011 DE 102011054129
(43) Veröffentlichungstag der Anmeldung: 06.08.2014
(73) Patentinhaber: Trinamic Motion Control GmbH & Co. KG, 22769 Hamburg (DE)
(72) Erfinder: LARSSON, Lars, 20249 Hamburg (DE); DWERSTEG, Bernhard, 25462 Rellingen (DE)
(74) Vertreter: Heun, Thomas
(86) Internationale Anmeldenummer: PCT/DE2012/100307
(87) Internationale Veröffentlichungsnummer: WO 2013/044912

(56) Entgegenhaltungen:
- EP-A2- 0 704 781
- DE-A1- 4 411 390
- US-A- 4 684 865

## Beschreibung

Die Erfindung betrifft ein Verfahren und eine insbesondere integrierte Schaltungsanordnung zum Ansteuern bzw. Betreiben von elektrischen Schrittmotoren mit zwei oder mehr Phasen, und zwar insbesondere während der Beschleunigung und/oder der Verzögerung der Motor-Drehbewegung.

Es ist bekannt, dass das Drehmoment von elektrischen Motoren und insbesondere von Schrittmotoren im Allgemeinen nicht über den gesamten möglichen Drehzahlbereich des Motors konstant ist, sondern mit steigender Drehzahl abnimmt. Aus diesem Grunde werden solche Motoren häufig nur bis zu einer bestimmten maximalen Drehzahl betrieben, bis zu der das maximale oder ein bestimmtes hohes Drehmoment nicht oder nicht wesentlich unterschritten wird.

Es hat sich jedoch gezeigt, dass es auch zahlreiche Anwendungen bzw. Motor-Betriebsphasen gibt, bei denen die dynamische Komponente der Motorlast einen wesentlichen oder überwiegenden Anteil an der gesamten Motorlast (die sich aus der dynamischen und einer statischen Komponente zusammensetzt) ausmacht, so dass der Motor zwar bis zu einer hohen Drehzahl betrieben werden kann, bei der jedoch das zur Beschleunigung dynamischer Masse bei hoher Drehzahl nur noch niedrige verfügbare Drehmoment und damit die mögliche Beschleunigung entsprechend gering ist. Unter der dynamischen Komponente der Last ist in diesem Zusammenhang derjenige Lastanteil zu verstehen, der durch die Beschleunigung bzw. Verzögerung träger Massen durch den Motor entsteht.

Während der Beschleunigungs- und der Verzögerungsphasen ist diese dynamische Komponente der Motorlast wesentlich größer, so dass ein umso höheres Drehmoment des Motors benötigt wird, desto höher die Beschleunigung bzw. Verzögerung des Motors gewählt wird, oder umgekehrt der Motor in diesen Phasen in einem vergleichsweise niedrigeren Drehzahlbereich betrieben werden muss, um eine bestimmte Beschleunigung bzw. Verzögerung aufzubringen.

Dies kann insbesondere in dem Fall problematisch sein, in dem die Beschleünigungs- und/oder Verzögerungsphasen möglichst schnell durchlaufen werden sollen, um z.B. die gesamte zeitliche Dauer für eine vorgegebene Fahrtstrecke zwischen einer Start- und einer Zielposition zu minimieren (d.h. der Motor soll möglichst schnell auf eine gewünschte End- oder Dauergeschwindigkeit beschleunigt werden und punktgenau an einer vorgegebenen Zielposition zum Stehen kommen), oder um einen bestimmten Resonanzbereich des Motors möglichst schnell zu durchlaufen.

Aus der US 4,684,865 ist ein Verfahren und eine Einrichtung zur Steuerung der Beschleunigung und/oder Verzögerung bei einem elektrischen Schrittmotor bekannt, mit dem/der verbesserte Beschleunigungs- und Verzögerungskurven gefahren werden sollen, indem vor dem Start des Motors für jedes einer Vielzahl von zeitlichen Beschleunigungsintervallen eine optimale Geschwindigkeit berechnet und in bestimmter Reihenfolge abgespeichert wird, wobei dann zur Ansteuerung des Motors während einer Beschleunigungsperiode die Geschwindigkeitswerte in dieser Reihenfolge und während einer Verzögerungsperiode die Geschwindigkeitswerte in umgekehrter Reihenfolge ausgelesen und umgesetzt werden.

Aus der DE-OS 44 11 390 ist ein Verfahren und eine Vorrichtung zur Abgabe von Positionsbefehlen bekannt, um zum Beispiel Servomotoren oder Spindelantriebe, die als Antrieb von Werkzeugmaschinen und ähnlichem dienen, in ihrer Position zu steuern. Mit dem Verfahren und der Vorrichtung soll insbesondere die Beschleunigungs- oder Verlangsamungszeit des hilfskraftgesteuerten Objektes verkürzt wehrden, indem das von dem gesteuerten Objekt zur Verfügung gestellte Drehmoment maximal genutzt wird.

In der EP 0 704 781 wird schließlich ein Verfahren zur Geschwindigkeitsführung von elektrischen Antrieben beschrieben, bei dem zur Vermeidung einer Überlastung der Antriebe aufgrund eines Abfalls des Drehmomentes bei höheren Drehzahlen die Bahngeschwindigkeit derart geführt wird, dass in einem Drehzahlbereich des elektrischen Antriebes mit konstant hohem Drehmoment eine Beschleunigungskennlinie mit konstanter Beschleunigung und in einem Drehzahlbereich des Antriebes mit abfallenden Drehmoment eine Beschleunigungskennlinie mit daran angepasster abfallender Beschleunigung verläuft.

Grundsätzlich muss also während der Beschleunigungs- und/oder Verzögerungsphasen die Beschleunigung bzw. Verzögerung des Motors an das bei einer momentan gegebenen Drehzahl verfügbare Drehmoment angepasst und insbesondere in einem höheren Drehzahlbereich, in dem sich das Drehmoment des Motors deutlich vermindert, entsprechend reduziert werden.

Um alle diese Forderungen bzw. Parameter zu erfüllen, muss der Motorstrom und die Drehzahl des Motors während des gesamten Betriebes zwischen einer Startposition und einer Zielposition in geeigneter Weise eingestellt werden.

Es ist auch bekannt, der Motor-Drehzahl zwischen einer Start- und einer Zielposition einen im Wesentlichen trapezförmigen Verlauf über der Zeit zu geben, wobei die steigenden und fallenden Abschnitte der Drehzahl (Rampen) im einfachsten Fall jeweils eine gerade Linie darstellen. Es sind jedoch auch andere Verläufe, wie z.B. S-förmige Rampen, bekannt, mit denen z.B. die Kanten eines trapezförmigen Verlaufes geglättet und damit ein unerwünschter Ruck im Motorlauf durch den Wechsel der Beschleunigung vermindert werden kann.

Aufgrund der gegenseitigen Abhängigkeit oder Beeinflussung der genannten Forderungen und Parameter kann eine Optimierung des Drehzahl-Verlaufes zwischen einer Start- und einer Zielposition mit einem relativ hohen schaltungstechnischen Aufwand verbunden sein, oder sie ist nur unvollkommen erreichbar.

Eine Aufgabe, die der Erfindung zugrunde liegt, besteht deshalb darin, ein Verfahren und eine insbesondere integrierte Schaltungsanordnung zum Ansteuern bzw. Betreiben eines Schrittmotors anzugeben, mit dem/der der zeitliche Verlauf der Motor-Drehzahl insbesondere während der Beschleunigungs- und/oder der Verzögerungsphase des Motors in relativ einfacher Weise optimiert werden kann.

Gelöst wird diese Aufgabe mit einem Verfahren gemäß Anspruch 1 sowie einer Schaltungsanordnung gemäß Anspruch 9.

Ein besonderer Vorteil dieser Lösung besteht darin, dass die steigenden und fallenden Rampen des zeitlichen Verlaufes der Motor-Drehzahl während der Beschleunigungs- bzw. Verzögerungsphase des Motors relativ einfach berechnet werden können.

Ein weiterer Vorteil dieser Lösung besteht darin, dass ein eventueller Resonanzbereich des Motors, der üblicherweise im Bereich relativ niedriger Drehzahlen liegt, relativ schnell durchfahren werden kann.

Schließlich kann die erfindungsgemäße Lösung auch schaltungstechnisch relativ einfach realisiert werden, da keine Sensoren wie zum Beispiel für die Drehzahl oder Geschwindigkeit oder Position bzw. Drehstellung des Motors erforderlich sind und dementsprechend auch keine solchen Sensorsignale ausgewertet werden müssen. Die Beschleunigungs- bzw. Verzögerungsphasen werden somit nicht geregelt, sondern nur gesteuert durchfahren, und zwar entsprechend vorzugsweise durch den Endanwender programmierbarer Geschwindigkeitsprofile, indem entsprechende Geschwindigkeits- und Beschleunigungs- bzw. Verzögerungsgrenzen festgelegt werden.

Die Schaltungsanordnung kann in relativ einfacher Weise als Bestandteil einer integrierten Ansteuerschaltung für einen Schrittmotor realisiert werden.

Schließlich ist das erfindungsgemäße Verfahren grundsätzlich auch zur Ansteuerung von anderen elektrischen Motoren geeignet, die nicht schrittweise betrieben bzw. angesteuert werden.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung. Es zeigt:
- Fig. 1: einen zeitlichen Verlauf einer Motordrehzahl zwischen einer Startposition und einer Zielposition;
- Fig. 2: ein Flussdiagramm einer erfindungsgemäßen Einstellung der Beschleunigung bzw. Verzögerung des Motors; und
- Fig. 3: den Verlauf eines Drehmomentes eines Schrittmotors sowie einer Beschleunigung und einer Verzögerung des Motors über der Motordrehzahl.

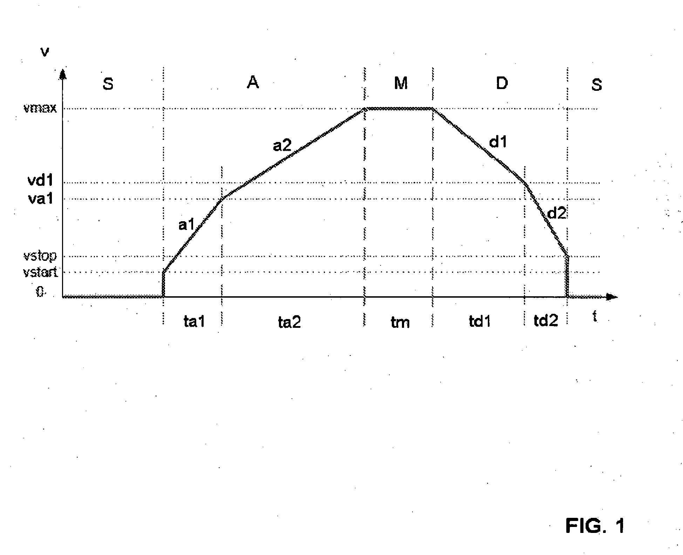

Figur 1 zeigt beispielhaft einen zeitlichen Verlauf der Motordrehzahl v (gleichbedeutend mit Motorgeschwindigkeit) zwischen einer Startposition und einer Zielposition. Dieser Verlauf unterteilt sich im wesentlichen in eine Beschleunigungsphase A mit einer Zeitdauer ta1+ta2, während der der Motor ausgehend von einer Start-Geschwindigkeit vstart auf eine vorbestimmte maximale Geschwindigkeit oder Endgeschwindigkeit vmax beschleunigt wird, eine Phase M mit einer Zeitdauer tm, während der der Motor mit der maximalen Geschwindigkeit oder Endgeschwindigkeit vmax (d.h. einer konstanten maximalen Drehzahl) betrieben wird, sowie eine Verzögerungs- oder Bremsphase D mit der Zeitdauer td1+td2, während der der Motor von der Endgeschwindigkeit vmax bis auf eine Stopp-Geschwindigkeit vstop abgebremst wird, um an einer Zielposition zum Stehen zu kommen. Dabei kann die Start-Geschwindigkeit vstart sowohl null, als auch eine vorbestimmte minimale Geschwindigkeit sein. Dies gilt sinngemäß auch für die Stopp-Geschwindigkeit vstop, wobei diese beiden Geschwindigkeiten gleich oder unterschiedlich sein können.

Weiterhin ist in Figur 1 gezeigt, dass sich die Beschleunigungsphase A aus einem ersten und einem zweiten zeitlichen Abschnitt ta1, ta2 zusammensetzt, wobei während des ersten Abschnitts ta1 der Motor von der Start-Geschwindigkeit vstart mit einer ersten Beschleunigung a1 bis zum Erreichen einer ersten Übergangs-Drehzahl va1 für die Beschleunigungsphase A und dann während des zweiten Abschnitts ta2 mit einer zweiten Beschleunigung a2 bis auf die Endgeschwindigkeit vmax beschleunigt wird.

Die Beschleunigungsphase A kann auch aus drei oder mehr solchen zeitlichen Abschnitten mit jeweils einer dritten bzw. einer vierten Beschleunigung a3, a4,.. zusammengesetzt sein, die jeweils bei Erreichen einer zweiten bzw. dritten usw. Übergangs-Drehzahl va2, va3,.. aktiviert werden. Die zeitlichen Abschnitte ta1, ta2, ta3,.. können dabei jeweils gleich oder unterschiedlich lang sein.

Die Beschleunigungen a1, a2,.. sind unterschiedlich hoch, wobei vorzugsweise die erste Beschleunigung a1 stets am höchsten ist und die weiteren Beschleunigungen a2, a3,... aufeinander folgend immer geringer werden und auf diese Weise an das mit zunehmender Drehzahl abnehmende Drehmoment angepasst sind.

Entsprechendes gilt auch für die Bremsphase D, die sich gemäß Figur 1 aus einem ersten und einem zweiten zeitlichen Abschnitt td1, td2 zusammensetzt, wobei während des ersten Abschnitts td1 der Motor von der Endgeschwindigkeit vmax mit einer ersten Verzögerung d1 bis auf eine erste Übergangs-Drehzahl vd1 für die Bremsphase D abgebremst und dann während des zweiten Abschnitts td2 mit einer zweiten Verzögerung d2 bis auf die Stopp-Geschwindigkeit vstop verzögert wird.

Die Bremsphase D kann ebenfalls aus drei oder mehr solchen zeitlichen Abschnitten mit jeweils einer dritten bzw. einer vierten Verzögerung ad3, ad4,.. zusammengesetzt sein, die jeweils bei Erreichen einer zweiten bzw. dritten usw. Übergangs-Drehzahl vd2, vd3,.. aktiviert werden. Die zeitlichen Abschnitte td1, td2,..tdn können dabei wiederum jeweils gleich oder unterschiedlich lang sein.

Die Verzögerungen d1, d2,.. sind wiederum unterschiedlich hoch, wobei vorzugsweise die erste Verzögerung d1 stets am niedrigsten ist und die weiteren Verzögerungen d2, d3,... aufeinander folgend immer höher werden und auf diese Weise an das mit abnehmender Drehzahl zunehmende Drehmoment (oder Bremsmoment) angepasst sind.

Die erste und die zweite sowie die ggf. weiteren Beschleunigungen a1, a2,.. sind, ebenso wie die erste und die zweite und die ggf. weiteren Verzögerungen d1, d2,.. jeweils konstant, so dass sich der gesamte Verlauf der Beschleunigungs- und der Bremsphase A, D aus jeweils mindestens zwei im wesentlichen geraden Segmenten zusammensetzt.

Schließlich ist es auch möglich, nur die Beschleunigungsphase A oder nur die Bremsphase D in zwei oder mehr der oben erläuterten zeitlichen Abschnitte mit jeweils konstanter Beschleunigung bzw. Verzögerung zu unterteilen und die jeweils andere Phase in bekannter Weise mit über ihre gesamte zeitliche Dauer konstanter oder variabler Beschleunigung bzw. Verzögerung zu aktivieren.

Die Übergangs-Drehzahl va1 für die Beschleunigungsphase A wird z.B. auf einen Wert voreingestellt, bei dessen Überschreiten das Drehmoment des Motors einen Knick aufweist, d.h. mit weiter steigender Drehzahl deutlich abnimmt oder unter einen vorbestimmten Wert abfällt. Entsprechend wird die Übergangs-Drehzahl vd1 für die Bremsphase D z.B. auf einen Wert voreingestellt, bei dessen Unterschreiten das Drehmoment (öder Bremsmoment) des Motors einen Knick aufweist und mit weiter fallender Drehzahl deutlich zunimmt oder über einen vorbestimmten Wert ansteigt.

Die Festlegung der Anzahl der zeitlichen Abschnitte ta1, ta2,.. der Beschleunigungsphase A und/oder die Anzahl der zeitlichen Abschnitte td1, td2,.. der Bremsphase D stellt vorzugsweisen einen Kompromiss zwischen einer möglichst genauen Anpassung der momentanen Beschleunigung bzw. Verzögerung an einen bestimmten Drehzahlbereich (bzw. das dadurch bedingte, zur Verfügung stehende Drehmoment des Motors) einerseits und den zur Realisierung erforderlichen Schaltungsaufwand andererseits dar.

Die Beschleunigungen a1, a2,.. während der Beschleunigungsphase A werden vorzugsweise so hoch gewählt, wie es das im jeweiligen Drehzahlbereich zur Verfügung stehende Drehmoment des Motors gestattet, damit die Beschleunigungsphase möglichst schnell beendet werden kann. Entsprechendes gilt vorzugsweise auch für die Höhe der Verzögerungen d1, d2,... während der Verzögerungsphase D, damit diese möglichst kurz wird und der Motor am Ende der Verzögerungsphase an einer gewünschten Zielposition zum Stehen kommt. Insgesamt nehmen dabei die Beschleunigungen a1, a2,... während der Beschleunigungsphase A mit zunehmender Drehzahl ab und die Verzögerungen d1, d2,.. während der Bremsphase D mit abnehmender Drehzahl entsprechend zu.

Üblicherweise ist bei einer für einen bestimmten Schrittmotor dimensionierten Ansteuerschaltung die maximale Motordrehzahl vmax fest vorgegeben. Dies betrifft vorzugsweise auch die Anzahl der zeitlichen Abschnitte ta1, ta2,..; td1, td2,.., während denen jeweils die Höhe der Beschleunigung a1, a2,.. bzw. die Höhe der Verzögerung d1, d2,.. konstant ist, sowie die Übergangs-Drehzahlen va1, va2...; vd1, vd2..., bei denen jeweils ein Übergang zwischen zwei benachbarten zeitlichen Abschnitten liegt, d.h. bei denen die Höhe der Beschleunigung bzw. die Höhe der Verzögerung geändert wird. Diese Parameter werden vorzugsweise in Abhängigkeit von dem Drehmomentverlauf des betreffenden Motors fest voreingestellt.

Somit wird durch einen Anwender vorzugsweise nur die Start- und die Zielposition des Motors festgelegt und in eine entsprechende Ansteuerschaltung eingegeben. In Abhängigkeit von diesen eingegebenen Positionen und den oben genannten, durch den Motor bestimmten Parametern wird dann für jeden der zeitlichen Abschnitte ta1, ta2,..; td1, td2,... die Höhe der Beschleunigung a1, a2,.. bzw. der Verzögerung d1, d2,... sowie die Übergangs-Drehzahlen va1, va2...; vd1, vd2... so berechnet, dass der Motor in einem niedrigen Drehzahlbereich mit einer hohen oder maximalen Beschleunigung beschleunigt bzw. mit einer hohen oder maximalen Verzögerung abbremst und in einem hohen Drehzahlbereich entsprechend dem verminderten Drehmoment mit einer demgegenüber geringeren Beschleunigung beschleunigt bzw. mit einer geringeren Verzögerung abbremst und an der Zielposition die Stopp-Geschwindigkeit erreicht.

Sofern die Start- und die Zielposition des Motors relativ nahe beieinander liegen, kann zur möglichst optimalen Einstellung der Beschleunigungen und Verzögerungen die zeitliche Dauer tm der konstanten maximalen Motordrehzahl entsprechend verkürzt werden oder entfallen, oder der Motor wird während dieser Dauer mit einer konstanten Motordrehzahl betrieben, die unterhalb der maximalen Motordrehzahl liegt.

Für die meisten Anwendungen dürften, wie in Figur 1 gezeigt, zwei zeitliche Abschnitte ta1, ta2 mit unterschiedlicher Beschleunigung a1, a2 sowie zwei zeitliche Abschnitte td1, td2 mit unterschiedlicher Verzögerung d1, d2 sowie dementsprechend einer Übergangs-Drehzahl va1 für die Beschleunigungsphase A und einer Übergangs-Drehzahl vd1 für die Bremsphase D einen optimalen Kompromiss zwischen einer für die jeweilige Drehzahl optimalen Beschleunigung bzw. Verzögerung und dem zur Realisierung erforderlichen Schaltungsaufwand darstellen.

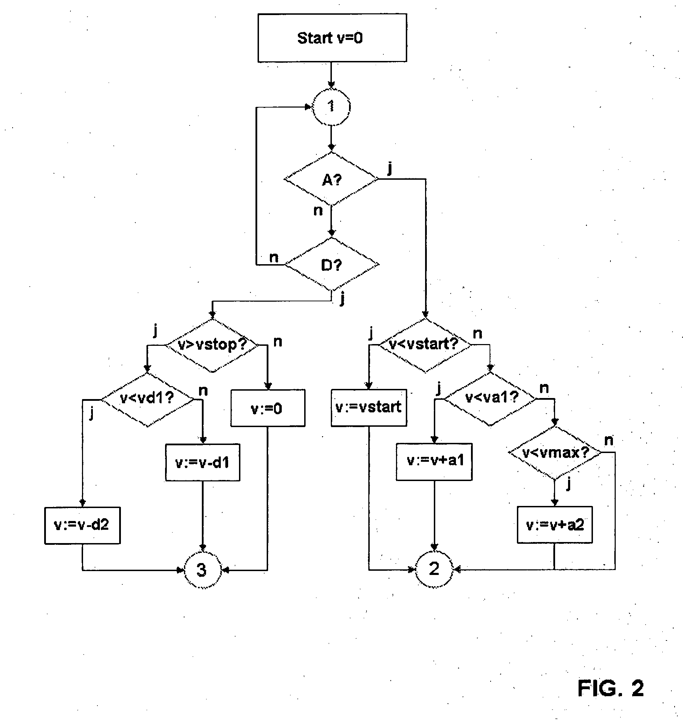

Ein Flussdiagramm zur Einstellung der Geschwindigkeit bzw. der Drehzahl des Motors während einer Beschleunigungsphase A sowie einer Bremsphase D, d.h. zur Einstellung der Höhe der Beschleunigung a1, a2 bzw. der Verzögerung d1, d2 des Motors während jeweils zweier zeitlicher Abschnitte ta1, ta2 bzw. td1, td2 gemäß Figur 1 ist in Figur 2 dargestellt.

Der Ablauf gemäß Figur 2 wird nach dem Start des Motors wiederholt durchgeführt, bis der Motor seine Zielposition erreicht hat. Zu diesem Zweck erfolgt nach dem Erreichen der Endpunkte 2 und 3 ein Rücksprung zu dem Anfangspunkt 1.

Nachdem also nach dem Start (oder einem vorherigen Durchlauf) der Anfangspunkt 1 (wieder) erreicht ist, erfolgt zunächst eine erste Abfrage, ob der Motor momentan in einer Beschleunigungsphase A läuft oder (unmittelbar nach dem Einschalten des Motors) laufen soll. Wenn diese Abfrage verneint wird, folgt eine zweite Abfrage, ob sich der Motor momentan in einer Bremsphase D befindet. Wenn auch diese Abfrage verneint wird, erfolgt ein Rücksprung zu dem Anfangspunkt 1, und es ist davon auszugehen, dass der Motor gerade in einer Betriebsart mit konstanter oder maximale Geschwindigkeit bzw. Drehzahl (Phase M in Figur 1) betrieben wird.

Wenn die erste Abfrage bejaht wird, folgt eine dritte Abfrage, ob der Motor mit einer Drehzahl v läuft, die kleiner ist als die Start-Drehzahl vstart. Wenn diese Abfrage bejaht wird, wird die Drehzahl des Motors auf die Start-Drehzahl eingestellt, und es erfolgt über den Endpunkt 2 ein Rücksprung zu dem Anfangspunkt 1.

Wenn die dritte Abfrage verneint wird, folgt eine vierte Abfrage, ob die Drehzahl v des Motors kleiner ist als die Übergangs-Drehzahl va1 während der Beschleunigungsphase A. Wenn diese Abfrage mit ja beantwortet wird, wird die Drehzahl v des Motors entsprechend der festgelegten Höhe der ersten Beschleunigung a1 erhöht, und es erfolgt über den Endpunkt 2 ein Rücksprung zu dem Anfangspunkt 1.

Wenn die vierte Abfrage verneint wird, folgt eine fünfte Abfrage, ob der Motor mit einer Drehzahl v läuft, die kleiner ist als die maximale oder konstante Motordrehzahl vmax. Wenn diese Abfrage bejaht wird, wird die Drehzahl v des Motors entsprechend der festgelegten Höhe der zweiten Beschleunigung a2 erhöht, und es erfolgt über den Endpunkt 2 ein Rücksprung zu dem Anfangspunkt 1. Wenn diese Abfrage verneint wird, so ist davon auszugehen, dass der Motor in der Betriebsart M mit maximaler (oder konstanter) Drehzahl betrieben wird, und der Ablauf kehrt über den Endpunkt 2 zu dem Anfangspunkt 1 zurück.

Wenn die zweite Abfrage hinsichtlich der Bremsphase D bejaht wird, folgt eine sechste Abfrage, ob der Motor mit einer Drehzahl v läuft, die größer ist als die Stopp-Drehzahl vstop. Wenn diese Abfrage verneint wird, wird die Drehzahl des Motors auf die Null gestellt, und es erfolgt über den Endpunkt 3 ein Rücksprung zu dem Anfangspunkt 1.

Wenn die sechste Abfrage bejaht wird, folgt eine siebte Abfrage, ob die Drehzahl v des Motors kleiner ist als die Übergangs-Drehzahl vd1 des Motors während der Bremsphase D.

Wenn diese Abfrage mit nein beantwortet wird, wird die Drehzahl v des Motors entsprechend der festgelegten Höhe der ersten Verzögerung d1 vermindert, und es erfolgt über den Endpunkt 3 ein Rücksprung zu dem Anfangspunkt 1. Wenn die siebte Abfrage bejaht wird, wird die Drehzahl v des Motors entsprechend der festgelegten Höhe der zweiten Verzögerung d2 vermindert, und es erfolgt über den Endpunkt 3 ein Rücksprung zu dem Anfangspunkt 1.

Die Aktivierung (d.h. der Start) der Beschleunigungsphase A erfolgt automatisch mit dem Start des Motors. Die Aktivierung (d.h. der Start) der Bremsphase D wird auf der Grundlage der Höhe der ersten und der zweiten Verzögerung d1, d2 sowie der gewählten Übergangs-Drehzahl vd1 während der Bremsphase D so aktiviert, dass der Motor in eine gewünschte Zielposition zum Stehen kommt.

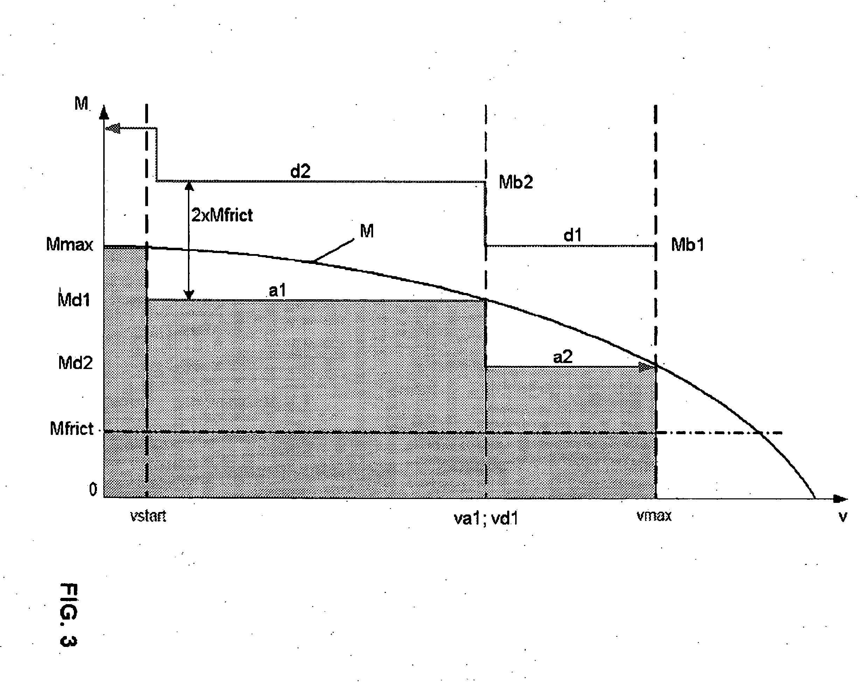

Figur 3 zeigt schematisch den Verlauf einer Drehmomentkurve M eines Schrittmotors über der Motor-Geschwindigkeit bzw. Motor-Drehzahl v. Wie bereits erläutert wurde, nimmt das Drehmoment M des Motors mit zunehmender Motor-Drehzahl ab, und zwar beginnend mit einem maximalen Drehmoment Mmax bis zu der Startgeschwindigkeit vstart, einem anschließenden ersten (höheren) Drehmoment Md1 für die erste (höhere) Beschleunigung a1 bis zu der Übergangs-Drehzahl va1 für die Beschleunigungsphase (die bei diesem Beispiel genauso groß ist wie die Übergangs-Drehzahl vd1 für die Bremsphase), sowie einem anschließenden zweiten (niedrigeren) Drehmoment Md2 für die zweite (niedrigere) Beschleunigung a2 bis zu der maximalen Geschwindigkeit vmax des Motors.

In dieser Darstellung ist auch angedeutet, dass das gesamte Drehmoment M des Motors auch ein Reibungsmoment Mfrict beinhaltet, das zur Überwindung von Reibung und statischer Lasten innerhalb des Systems erforderlich ist. Aus diesem Grund kann die erste und die zweite Verzögerung d1, d2 während der Bremsphase des Motors hinsichtlich ihres jeweiligen Betrages stets größer sein als die zweite bzw. die erste Beschleunigung a2, a1 des Motors während der Beschleunigungsphase. Die Different zwischen dem zweiten (höheren) Bremsmoment Mb2 für die zweite (höhere) Verzögerung d2 und dem ersten (höheren) Drehmoment Md1 für die erste (höhere) Beschleunigung a1 entspricht im dargestellten Beispiel etwa dem Doppelten des Reibungsmomentes Mfrict. Dies kann vorzugsweise auch für die Differenz zwischen dem ersten (niedrigeren) Bremsmoment Mb1 für die erste (niedrigere) Verzögerung d1 und dem zweiten (niedrigeren) Drehmoment Md2 für die zweite (niedriger) Beschleunigung a2 gelten:

Die oben beschriebene Aktivierung der Beschleunigungsphase A und/oder der Bremsphase D sowie die Realisierung der gewählten ersten und zweiten Beschleunigung a1, a2 bzw. Verzögerung d1, d2 der Motor-Drehzahl in Abhängigkeit von den betreffenden Übergangs-Drehzahlen kann sowohl schaltungstechnisch mittels Komparatoren, Registern usw., als auch mittels einer Software und eines Mikroprozessors erfolgen. In beiden Fällen wird diese Realisierung vorzugsweise als Bestandteil einer integrierten Schrittmotor-Ansteuerschaltung vorgenommen.

## Patentansprüche

1. Verfahren zum Ansteuern eines Schrittmotors während einer Beschleunigungs- und/oder Bremsphase der Motor-Drehbewegung zwischen einer Start-Position mit einer Start-Drehzahl (vstart) und einer Stopp-Position mit einer Stopp-Drehzahl (vstopp), **gekennzeichnet durch** folgende Schritte:
- eine erste Abfrage, ob der Motor momentan in einer Beschleunigungsphase (A) läuft, oder, unmittelbar nach dem Einschalten des Motors, laufen soll, sowie
- eine zweite Abfrage, ob sich der Motor momentan in einer Bremsphase (D) befindet; wobei
- wenn die erste Abfrage bejaht wird, eine momentane Drehzahl (v) des Motors mit mindestens einer vorbestimmten Übergangs-Drehzahl (va1) für die Beschleunigungsphase (A) verglichen und die momentane Drehzahl (v) mit einer ersten konstanten Beschleunigung (a1) erhöht wird, wenn die momentane Drehzahl (v) kleiner ist als die vorbestimmte Übergangs-Drehzahl (va1), und mit einer zweiten konstanten Beschleunigung (a2) erhöht wird, wenn die momentane Drehzahl (v) größer ist als die vorbestimmte Übergangs-Drehzahl (va1), wobei die erste Beschleunigung (a1) höher ist als die zweite Beschleunigung (a2) und die Höhe der ersten und der zweiten Beschleunigung (a1, a2) so hoch gewählt wird, dass diese mit dem in dem jeweiligen Drehzahlbereich zur Verfügung stehenden Drehmoment des Motors jeweils gerade erreicht werden kann,
- wenn die zweite Abfrage bejaht wird, eine momentane Drehzahl (v) des Motors mit mindestens einer vorbestimmten Übergangs-Drehzahl (vd1) für die Bremsphase (D) verglichen und die momentane Drehzahl (v) mit einer ersten konstanten Verzögerung (d1) vermindert wird, wenn die momentane Drehzahl (v) größer ist als die vorbestimmte Übergangs-Drehzahl (vd1), und mit einer zweiten konstanten Verzögerung (d2) vermindert wird, wenn die momentane Drehzahl (v) kleiner ist als die vorbestimmte Übergangs-Drehzahl (vd1), wobei die erste Verzögerung (d1) kleiner ist als die zweite Verzögerung (d2) und die Höhe der ersten und der zweiten Verzögerung (d1, d2) so hoch gewählt wird, dass diese mit dem in dem jeweiligen Drehzahlbereich zur Verfügung stehenden Drehmoment oder Bremsmoment des Motors gerade erreicht werden kann, und wobei
- wenn die erste und die zweite Abfrage verneint wird, der Motor mit der maximalen oder konstanten Motordrehzahl (vmax) läuft.

2. Verfahren nach Anspruch 1,
bei dem die Start-Drehzahl (vstart) und die Stopp-Drehzahl (vstopp) jeweils Null oder eine vorbestimmte minimale Drehzahl ist.

3. Verfahren nach Anspruch 1,
bei dem die Start-Drehzahl (vstart) und die Stopp-Drehzahl (vstopp) jeweils gleich oder unterschiedlich groß sind.

4. Verfahren nach Anspruch 1,
bei dem die mindestens eine Übergangs-Drehzahl (va1) für die Beschleunigungsphase (A) auf einen Wert voreingestellt wird, bei dessen Überschreiten das Drehmoment des Motors mit steigender Drehzahl abnimmt oder unter einen vorbestimmten Wert abfällt.

5. Verfahren nach Anspruch 1,
bei dem die mindestens eine Übergangs-Drehzahl (vd1) für die Bremsphase (D) auf einen Wert voreingestellt wird, bei dessen Unterschreiten das Drehmoment oder Bremsmoment des Motors mit fallender Drehzahl zunimmt oder über einen vorbestimmten Wert ansteigt.

6. Verfahren nach Anspruch 1,
bei dem die erste und die zweite Verzögerung (d1, d2) während der Bremsphase (D) des Motors hinsichtlich ihres jeweiligen Betrages stets größer ist, als die zweite bzw. die erste Beschleunigung (a2, a1) des Motors während der Beschleunigungsphase (A).

7. Verfahren nach Anspruch 1,
bei dem der Start der Beschleunigungsphase (A) automatisch mit dem Start des Motors erfolgt.

8. Verfahren nach Anspruch 1,
bei dem der Start der-Bremsphase (D) auf der Grundlage der Höhe der ersten und der zweiten Verzögerung (d1, d2) sowie der vorbestimmten Übergangs-Drehzahl (vd1) während der Bremsphase (D) so aktiviert wird, dass der Motor in eine gewünschte Zielposition zum Stehen kommt.

9. Schaltungsanordnung mit diskreten Bauelementen und/oder mit einem Mikroprozessor und einem Computerprogramm zur Durchführung eines Verfahrens nach einem der vorhergehenden Ansprüche.

10. Integrierte Ansteuerschaltung für einen Schrittmotor mit einer Schaltungsanordnung nach Anspruch 9.

## Claims

1. Method for controlling a stepper motor during an acceleration phase and/or a deceleration phase of the motion of rotation of the motor between a start position having a start rotation speed (vstart) and a stop position having a stop rotation speed (vstop), **characterized by** the following steps:
- a first interrogation if the motor is instantaneously running in an acceleration phase (A) or, immediately after switching on the motor, shall run in an acceleration phase (A), and
- a second interrogation if the motor is instantaneously running in a deceleration phase (D); wherein
- if the first interrogation is affirmative, an instantaneous rotation speed (v) of the motor is compared with at least one predetermined transition rotation speed (va1) for the acceleration phase (A), and the instantaneous rotation speed (v) is increased by a first constant acceleration (a1), if the instantaneous rotation speed (v) is lower than the predetermined transition rotation speed (va1), and is increased by a second constant acceleration (a2), if the instantaneous rotation speed (v) is higher than the predetermined transition rotation speed (va1), wherein the first acceleration (a1) is higher than the second acceleration (a2) and the height of the first and the second acceleration (a1, a2) is selected such high that it just can be reached by means of the torque of the motor which is available in the related rotation speed range,
- If the second interrogation is affirmative, an instantaneous rotation speed (v) of the motor is compared with at least one predetermined transition rotation speed (vd1) for the deceleration phase (D), and the instantaneous rotation speed (v) is decreased by a first constant deceleration (d1), if the instantaneous rotation speed (v) is higher than the predetermined transition rotation speed (vd1), and is decreased by a second constant deceleration (d2), if the instantaneous rotation speed (v) is lower than the predetermined transition rotation speed (vd1), wherein the first deceleration (d1) is lower than the second deceleration (d2) and the height of the first and the second deceleration (d1, d2) is selected such high that it just can be reached by means of the torque or the deceleration moment of the motor which is available in the related rotation speed range, and wherein
- If the first and the second interrogation is negated, the motor is operated with the highest or a constant motor rotation speed (vmax).

2. Method according to claim 1,
in which the start rotation speed (vstart) and the stop rotation speed (vstop) is zero or a predetermined minimum rotation speed.

3. Method according to claim 1,
in which the start rotation speed (vstart) and the stop rotation speed (vstop) are equal or different.

4. Method according to claim 1,
in which the at least one transition rotation speed (va1) for the acceleration phase (A) is pre-adjusted on a value at which, when exceeded, the torque of the motor decreases with increasing rotation speed or decreases below a predetermined value.

5. Method according to claim 1,
in which the at least one transition rotation speed (vd1) for the deceleration phase (D) is pre-adjusted on a value at which, when going below, the torque or the deceleration moment of the motor increases with decreasing rotation speed or increases above a predetermined value.

6. Method according to claim 1,
in which the first and the second deceleration (d1, d2) during the deceleration phase (D) of the motor is always higher as regards the related amount, as the second and the first acceleration (a2, a1), respectively, of the motor during the acceleration phase (A).

7. Method according to claim 1,
in which the start of the acceleration phase (A) is automatically conducted with the start of the motor.

8. Method according to claim 1,
in which the start of the deceleration phase (D) is activated on the basis of the height of the first and the second deceleration (d1, d2) and the predetermined transition rotation speed (vd1) during the deceleration phase (D) such that the motor comes to a stop at a desired target position.

9. Circuit arrangement comprising discrete components and/or a microprocessor and a computer program for conducting a method according to one of the preceding claims.

10. Integrated driver circuit for a stepper motor comprising a circuit arrangement according to claim 9.

## Revendications

1. Procédé pour commander un moteur pas à pas pendant une phase d'accélération et/ou une phase de décélération du mouvement de rotation du moteur entre une position de démarrage présentant une vitesse de rotation au démarrage (vstart) et une position d'arrêt présentant une vitesse de rotation à l'arrêt (vstop), **caractérisé par** les étapes suivantes:
- une première interrogation pour savoir si le moteur tourne instantanément dans une phase d'accélération (A) ou, immédiatement après l'allumage du moteur, tournera dans une phase d'accélération (A), et
- une deuxième interrogation pour savoir si le moteur tourne instantanément dans une phase de décélération (D); dans lequel:
- si la première interrogation est affirmative, une vitesse de rotation instantanée (v) du moteur est comparée avec au moins une vitesse de rotation de transition prédéterminée (va1) pour la phase d'accélération (A), et la vitesse de rotation instantanée (v) est accrue par une première accélération constante (a1), si la vitesse de rotation instantanée (v) est inférieure à la vitesse de rotation de transition prédéterminée (va1), et est accrue par une deuxième accélération constante (a2), si la vitesse de rotation instantanée (v) est supérieure à la vitesse de rotation de transition prédéterminée (va1), dans lequel la première accélération (a1) est supérieure à la deuxième accélération (a2) et la hauteur des première et deuxième accélérations (a1, a2) est sélectionnée suffisamment haute pour qu'elle puisse juste être atteinte au moyen du couple du moteur qui est disponible dans la plage de vitesses de rotation concernée,
- si la deuxième interrogation est affirmative, une vitesse de rotation instantanée (v) du moteur est comparée avec au moins une vitesse de rotation de transition prédéterminée (vd1) pour la phase de décélération (D), et la vitesse de rotation instantanée (v) est diminuée par une première décélération constante (d1), si la vitesse de rotation instantanée (v) est supérieure à la vitesse de rotation de transition prédéterminée (vd1), et est diminuée par une deuxième décélération constante (d2), si la vitesse de rotation instantanée (v) est inférieure à la vitesse de rotation de transition prédéterminée (vd1), dans lequel la première décélération (d1) est inférieure à la deuxième décélération (d2) et la hauteur des première et deuxième décélérations (d1, d2) est sélectionnée suffisamment haute pour qu'elle puisse juste être atteinte au moyen du couple ou du moment de décélération du moteur qui est disponible dans la plage de vitesses de rotation concernée, et dans lequel
- si la première et la deuxième interrogations sont négatives, le moteur tourne à la vitesse de rotation de moteur la plus élevée ou constante (vmax).

2. Procédé selon la revendication 1,
dans lequel la vitesse de rotation au démarrage (vstart) et la vitesse de rotation à l'arrêt (vstop) sont nulles ou sont une vitesse de rotation minimum prédéterminée.

3. Procédé selon la revendication 1,
dans lequel la vitesse de rotation au démarrage (vstart) et la vitesse de rotation à l'arrêt (vstop) sont égales ou différentes.

4. Procédé selon la revendication 1,
dans lequel ladite au moins une vitesse de rotation de transition (va1) pour la phase d'accélération (A) est préréglée sur une valeur à laquelle, lorsqu'elle est dépassée, le couple du moteur diminue avec une vitesse de rotation croissante ou diminue en dessous d'une valeur prédéterminée.

5. Procédé selon la revendication 1,
dans lequel ladite au moins une vitesse de rotation de transition (vd1) pour la phase de décélération (D) est préréglée sur une valeur à laquelle, lorsqu'elle est dépassée vers le bas, le couple ou le moment de décélération du moteur augmente avec une vitesse de rotation décroissante ou augmente au-dessus d'une valeur prédéterminée.

6. Procédé selon la revendication 1,
dans lequel les première et deuxième décélérations (d1, d2) pendant la phase de décélération (D) du moteur sont toujours plus élevées s'agissant de la quantité relative, que les deuxième et première accélérations (a2, a1), respectivement, du moteur pendant la phase d'accélération (A).

7. Procédé selon la revendication 1,
dans lequel le démarrage de la phase d'accélération (A) est automatiquement réalisé avec le démarrage du moteur.

8. Procédé selon la revendication 1,
dans lequel le démarrage de la phase de décélération (D) est activé sur la base de la hauteur des première et deuxième décélérations (d1, d2) et de la vitesse de rotation de transition prédéterminée (vd1) pendant la phase de décélération (D) de telle sorte que le moteur s'arrête à une position cible souhaitée.

9. Agencement de circuit comprenant des composants discrets et/ou un microprocesseur et un programme d'ordinateur pour exécuter un procédé selon l'une des revendications précédentes.

10. Circuit d'amorçage intégré pour un moteur pas à pas comprenant un agencement de circuit selon la revendication 9.
